# EUROPEAN PATENT APPLICATION

(11) **EP 3 731 162 A1**
(43) Date of publication of application: **28.10.2020**
(21) Application number: 19766756.1
(22) Date of filing: 01.02.2019
(51) Int. Cl.: G06Q 20/06, G06Q 20/38

(54) **BLOCK CHAIN DATA PROCESSING METHOD, MANAGEMENT TERMINAL, USER TERMINAL, CONVERSION DEVICE, AND MEDIUM**

(30) Priority: 14.03.2018 CN 201810210284; 02.05.2018 CN 201810411150
(71) Applicant: Zheng, Jieqian, Duyun, Guizhou 558000 (CN)
(72) Inventor: Zheng, Jieqian, Duyun, Guizhou 558000 (CN)
(74) Representative: AWA Sweden AB
(86) International application number: PCT/CN2019/074440
(87) International publication number: WO 2019/174430

(57) **Abstract**

Embodiments of the present application provide a block chain data processing method, a management end, a user end, a conversion apparatus, and a storage medium. The block chain data processing method includes: writing transaction data into block data of a first chain system after the transaction data is verified to be passed and performed with an endorsement signature, the block data of the first chain system is written into block data of a second chain system, the block data of the second chain system is sequentially composed of one or more block data of the first chain system, and a state of any account on the first chain system is consistent with a state of the account on the second chain system.

## Description

### Technical Field

The document relates to but is not limited to the technical field of computer data processing, in particular to a block chain data processing method, a management end apparatus, a user end apparatus, a conversion apparatus, and a computer readable storage medium.

### Background

At present, a decentralized system such as a public chain system may reduce trust cost among transaction participants and can be used as a basis of trust to realize value transfer because of its characteristics of openness, transparency, traceability and non-tampering.

However, the decentralized system has following problems: low efficiency, lack of perfect supervision and privacy protection, and lack of relevant endorsement for issuance of a token (which may be called a pass card), which makes it impossible to realize private transaction and retrieval under massive data.

### Summary

The following is a summary of topics described in detail herein. The summary is not intended to limit protection scope of claims.

In a first aspect, an embodiment of the present application provides a data processing method of a management end, including: writing transaction data into block data of a first chain system after the transaction data is verified to be passed and performed with an endorsement signature; and writing the block data of the first chain system into block data of a second chain system, wherein the block data of the second chain system is sequentially composed of one or more block data of the first chain system, and a state of any account on the first chain system is consistent with a state of the account on the second chain system.

In a second aspect, the embodiment of the present application provides a data processing method of a user end, including: generating, by a transaction receiving end, a transaction address of a receiving transaction of this time according to an address parameter in previous receiving transaction data and searching for transaction data containing the transaction address from a second chain system; wherein block data in the second chain system is sequentially composed of one or more block data of a first chain system, and a state of any account in the first chain system is consistent with a state of the account in the second chain system.

In a third aspect, the embodiment of the present application provides a data processing method of a conversion apparatus, including: initiating a conversion transaction, signing transaction data by using a signature key of a conversion institution account, generating a first unlocking script to convert an unspent transaction output in an original account of a user end into a new unspent transaction output, verifying transaction data formed by a transaction initiated by the conversion institution account to be passed and performing an endorsement signature on the transaction data, writing the transaction data into block data of a first chain system, writing the block data of a first chain system into block data of a second chain system, wherein the block data of the second chain system is sequentially composed of one or more block data of the first chain system, and a state of any account on the first chain system is consistent with a state of the account on the second chain system.

In a fourth aspect, the embodiment of the present application provides a management end apparatus, which includes a verification module and an endorsement signature module, wherein: the verification module is configured to verify transaction data; and the endorsement signature module is configured to perform an endorsement signature on the transaction data after the verification module verifies the transaction data to be passed, and the transaction data after being performed with the endorsement signature will be written into block data of a first chain system; wherein the transaction data includes a transaction address of a transaction receiving end and an address parameter generated during a transaction of this time, the transaction address is generated by using an address parameter generated when the transaction receiving end received a transaction last time, and the address parameter generated during the transaction of this time is used for generating a transaction address for the transaction receiving end to receive a transaction next time; and all receiving transaction data at the same transaction receiving end form a logical chain structure.

In a fifth aspect, the embodiment of the present application provides a user end apparatus, which includes a second address generation module and a retrieval module, wherein: the second address generation module is configured to generate a transaction address of a receiving transaction of this time according to an address parameter in a previous receiving transaction data; and the retrieval module is configured to search transaction data including the transaction address from a second chain system.

In a sixth aspect, the embodiment of the present application provides a conversion apparatus, which includes an initiation module and a signature module, wherein: the initiation module is configured to initiate a conversion transaction according to enabling of a management end apparatus; and the signature module is configured to use a signature key of a conversion institution account to sign transaction data and generate a first unlocking script to convert an unspent transaction output in an original account of a user end into a new unspent transaction output; wherein transaction data formed by a transaction initiated by the conversion institution account is written into block data of a first chain system after being verified to be passed and performed with an endorsement signature, the block data of the first chain system is written into block data of a second chain system, the block data of the second chain system is sequentially composed of one or more block data of the first chain system, and a state of any account on the first chain system is consistent with a state of the account on the second chain system.

In a seventh aspect, the embodiment of the present application provides a computer readable storage medium storing computer instructions which, when executed by a processor, implement the data processing method of the management end, or the data processing method of the user end, or the acts of the data processing method of the conversion apparatus.

Other aspects will become apparent upon reading and understanding drawings and detailed description.

### Brief Description of Drawings

FIG. 1 is a flowchart of a data processing method according to an embodiment of the present application.
FIG. 2 is a schematic diagram of a trusted system according to an embodiment of the present application.
FIG. 3 is a schematic diagram of inter-chain flow between a first chain and a second chain in a trusted system provided by an embodiment of the present application.
FIG. 4 is a flowchart of an embodiment of a data processing method of a management end according to an embodiment of the present application.
FIG. 5 is a flowchart of another embodiment of a management data processing method of a management end according to another embodiment of the present application.
FIG. 6 is a structural schematic diagram of a management end apparatus according to an embodiment of the present application.
FIG. 7 is a flowchart of a data processing method of a user end according to an embodiment of the present application.
FIG. 8 is a structural schematic diagram of a user end apparatus according to an embodiment of the present application.
FIG. 9 is a flowchart of an embodiment of the present application.

### Detailed Description

The embodiments in the present application and features in the embodiments may be combined with each other arbitrarily without conflict.

Acts shown in the flowchart of the drawings may be executed in a computer system of a set of computer executable instructions. Moreover, although logical orders are shown in the flowchart, in some situations, the acts shown or described in the flowchart may be executed in different orders other than the orders herein.

The terms "first", "second" and the like in the document and the drawings are used to distinguish similar objects and are not used to describe a specific order or sequence.

The embodiment of the present application provides a trusted system combining centralization and decentralization to solve the problems existing in the background technology.

The following describes concepts involved in the embodiments of the present application.

A token refers to a token on a block chain, further known as a pass card.

A public chain refers to a block chain that anyone may read, send transactions and participate in consensus, which belongs to a completely decentralized system. The embodiment of the document adopts a quasi-public chain system which is the same as a public chain system except that anyone may send transactions. In the quasi-public chain system described in the document, anyone may read, verify transactions and participate in consensus, which may be traceable and cannot be tampered with.

A private chain refers to a data chain with write permission in a hand of an institution, belonging to a centralized system.

An alliance chain refers to a data chain with write permission in hands of a plurality of organizations, belonging to a partially decentralized system.

An EID (electronic Identity) refers to a network electronic identity of a citizen, and is a credible real-name authentication method.

Secret sharing refers to splitting of secret messages into N parts in an appropriate way, only when M parts or more than M parts cooperate can secret messages be recovered, marked as (M, N), and M and N are positive integers greater than 1.

The embodiment of the present application provides a trusted system combining centralization and decentralization. In the embodiment of the present application, a centralized system (or referred to as a first chain system or a first chain) may be a private chain or an alliance chain. A decentralized system (or referred to as a second chain system or a second chain) may be a public chain or an alliance chain. There is no necessary relationship between which chain the first chain uses and which chain the second chain uses. For example, when the first chain is a private chain, the second chain may be either a public chain or an alliance chain. Similarly, when the first chain is an alliance chain, the second chain may be either a public chain or an alliance chain. The second chain has a characteristic of being open to the public, so it is further referred to as an external system in the embodiment. The centralized system may have an administrator role (a management end node or a management end apparatus, hereinafter referred to as a management end) and a user role (a user end node or a user end apparatus, hereinafter referred to as a user end). Optionally, the first chain system may further include one or more specific institutional roles (including, but not limited to, one or more of the following: a chain generation institution, an issuance institution, a conversion institution, etc.), because the first chain system is a management end system, and it is hereinafter further referred to as a first chain system of a management end. The decentralized system may have a user role (a user role on the first chain system is the same as a user role on the second chain system) and a chain generation node (unlike the chain generation institution of the centralized system, the chain generation institution generates the first chain and the chain generation node generates the second chain). Optionally, the second chain system may further have participation of a third party and a supervisor, the third party may be any other person or institution, and the supervisor is an institution with specific authority (e.g. authentication). Since the second chain system is a system that provides external inquiry, verification and supervision, it is further referred to as an external second chain system.

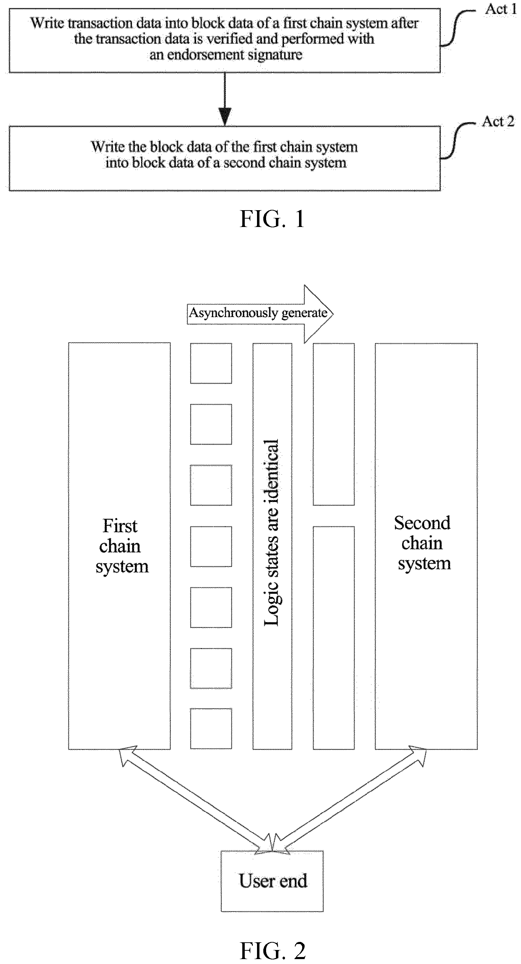

As shown in FIG. 1, a data processing method of the embodiment of the present application includes the following acts.

In act 1, transaction data is written into block data of a first chain system after the transaction data is verified and performed with an endorsement signature.

Transaction data submitted by a user requires a management end to verify the transaction data and endorse the transaction data with a signature. The transaction data after verification and being endorsed with the signature will be written into block data of a first chain through a chain generation institution.

In act 2, the block data of the first chain system is written into block data of a second chain system, the block data of the second chain system is sequentially composed of one or more block data of the first chain system, and a state of any account on the first chain system is consistent with a state of the account on the second chain system.

When the first chain generates new block data, it will synchronize with a chain generation node of a second chain, after the block data is verified, the chain generation node generates new block data according to a consensus algorithm of the second chain, wherein verification includes verification of all data in a block. In the second chain, only the block data submitted by the first chain at the management end are recorded sequentially, and a quantity of the block data of the first chain contained in each block data on the second chain may not be fixed, that is, each block on the second chain may contain block data of a quantity from 1 to n of the first chain, the quantity of which is determined by the consensus algorithm of the second chain. Therefore, each block data on the external second chain system is formed by sequentially combining one or more block data of the first chain system at the management end, so that the first chain system at the management end and the external second chain system are identical in a logic state. The trusted system provided by the example may be regarded as a dual-layer system (including the first chain system at the management end and an external second chain system). However, the present application is not limited thereto. In an actual application, the system may be extended to a multi-layer system, for example, the system is extended at the management end and may be extended to be of multi-layer.

The first chain system at the management end and the second chain system at the outside may use different consensus algorithms. For example, the first chain system at the management end uses an algorithm with shorter consensus time, which may meet needs of fast confirmation and high-frequency trading, while the external second chain system uses an algorithm with longer consensus time. Therefore, time for the two chains to generate block data may be different and may be an asynchronous process, as shown in FIG. 2. Therefore, the generation of the external second chain will not affect the generation of the first chain at the management end, thus meeting a high concurrency requirement at the management end. The block data of the second chain is formed by sequentially combining one or more block data of the first chain. Since data blocks used by the second chain are block data packaged by the first chain at the management end, it is further beneficial to the generation of the block data of the second chain and may meet a requirement for massive data. It may be seen that the first chain and the second chain of the trusted system in the embodiment are asynchronously homomorphic, and the first chain system at the management end may check its own data state through the second chain system, and may recover all block data through the second chain system except those not synchronized to the second chain system in time.

Optionally, the second chain system may further include extension data, which may be system state data of the second chain system itself and does not relate to a system state of the first chain system, so it will not affect a difference of logic states between the first chain system and the second chain system.

In the embodiment, states of any account acquired by different methods on the first chain system at the management end and the external second chain system are consistent. Illustratively, the management end may generate a system state tree to acquire a state of any account. The state of the account may include: account balance, initial address parameters, frozen or unfrozen state information, etc. On the second chain, a state of the account balance may be acquired by accumulating transaction results, and the rest state may be acquired by retrieving user encrypted information in control data; and a state of an account acquired through accumulated transaction results is consistent with a state of the account acquired at the management end. A wallet of the user end may automatically verify whether a state of an account acquired on the first chain at the management end is consistent with a state of the account acquired on the external second chain.

The following description will take a first chain system at a management end as a private chain and an external second chain system as a public chain.

The management end is a manager of a system. Registration, cancellation, certificate renewal and issuance of encryption keys and the like of users and institutions are all performed through the management end. The management end may have functions of freezing or unfreezing accounts and preventing illegal transactions. Issuance and recycling of a system token further requires participation of the management end. A chain generation institution is a generator of the private chain at the management end. An issuance institution participates in the issuance of the token. A conversion institution participates when a user only has a local non-exportable signature key and loses it. All identities of the institutions are public and not confidential. Institutions associated with the private chain system at the management end may further include a trusted third-party Certificate Authority (CA) institution (or an eID institution), or a trusted third-party hosted signature key institution, etc.

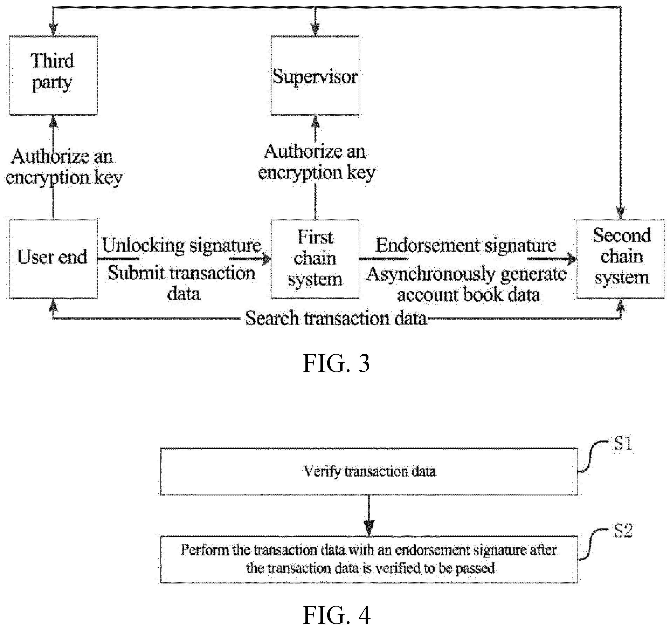

A chain generation node in the external public chain system does not need permission from the management end, and may verify data on the public chain and participate in consensus and generation of the public chain system according to corresponding rules. The data on the chain are public, traceable and cannot be tampered with, but are not completely transparent. All of the chain generation node, the third party and the supervisor may verify correctness of the data on the chain, but none of them knows corresponding user identity, related transaction and asset information of a user and it is impossible to do that even if the user's identity and related transactions are traced by using an address. But the third party and the supervisor may acquire the user's related transaction and asset information from the public chain by themselves after acquiring an authorization of an encryption key at the user end or the management end. The user himself further acquires himself related transaction data, asset information and user information from the public chain through the encryption key, as shown in FIG. 3.

In order to use the trusted system described in the embodiment, the user first needs real name authentication and then registers on the private chain at the management end. After registration, transaction data generated by a transaction initiated by the user is verified by the management end and written into the private chain by the chain generation institution after being performed with an endorsement signature. The private chain will synchronize the data to the public chain, while both parties of the transaction, the chain generation node, the third party, and the supervisor etc. query and verify the transaction data on the public chain. That is, a read operation for the user, the third party, and the supervisor by the entire system is performed on the public chain, while a write operation is performed on the private chain by the management end. Therefore, the system of the embodiment is read-write separated.

In the embodiment of the document, the data on the private chain at the management end may include a control data set and a transaction data set, as well as block header data generated by the chain generation institution through a consensus algorithm. The control data set is mainly a set of information data released by the management end for managing and controlling the first chain system, including but not limited to one or more pieces of the following information: registration information of users and institutions, issuance and recycling of tokens, transaction rules, identity certificates and update information (e.g., updated user information, and/or updated system algorithm keys, etc.). Except that identity information of users is ciphertext, most of the remaining data are plaintext, so as to facilitate effective supervision and protect identity privacies of the users. A transaction data set is a set of all individual transactions within a time segment. In each transaction data, except a token amount and a user identification corresponding to an output address are ciphertext, the remaining data are plaintext, wherein the user identification corresponding to the output address is optional in the transaction data. The token amount of the transaction is encrypted by means of confidential transaction (e.g., additive homomorphic commitment). Except that a confidential encryption key (a key owned by a user end and a management end corresponding to a transaction address) corresponding to the token can decrypt the plaintext, the rest cannot decrypt and view the plaintext, but validity of the token amount of the confidential transaction may be verified by the ciphertext, i.e., whether a sum of all input tokens minus a sum of all output tokens of the transaction is equal to zero and all item values are not negative may be verified in the case of the ciphertext. The block header data includes a Merkle Tree root hash generated by the control data set, a Merkle Tree root hash generated by the transaction data set, a Merkle Patricia Tree root hash of a present system state tree generated by the management end, and hash values, block numbers, timestamps, consensus parameters, etc. of a previous block header, and relevant signatures are required to ensure anti-counterfeiting and anti-denial of the block header data. The management end needs all encryption keys of the system to generate the system state tree, so the state tree is only used at the management end and is a virtual state tree.

In the embodiment, a key at the user end is classified into two types: a signature key and an encryption key.

The signature key is locally generated and managed by the user end, and non-exportable hardware is used as a carrier to ensure safe use of the key. The signature key may realize a user's real-name identity authentication by issuing the user's identity authentication certificate by a CA institution or using an eID mechanism. The signature key includes a certificate signature public key and a signature private key. In addition, in an optional embodiment, the system may adopt a multi-signature method. The user end may use a hosted signature key of a trusted third-party in addition to a local signature key. The key is a hosted signature key applied by the management end at the trusted third party after the user end is registered at the management end through the identity authentication certificate or eID. The user end may use the hosted signature key by using a Fast Identification Online (FIDO) method and form a multi-signature address together with the local signature key of the user end. Optionally, a type of multi-signature may be identified, for example, for a purpose of convenient use when a user makes small payments, a local non-derivable signature key may be used to pay higher fees, while a signature key hosted by a trusted third party may be used to pay lower fees, the two signature keys may be used jointly to strengthen security of a user account, and a multi-signature address of a joint account may be formed by using signature keys of a plurality of users. In an optional embodiment, an asset may further be safely transferred to a new account by using a hosted key when a user loses a local non-exportable signature key. In another optional embodiment, if a user end does not have a hosted signature key and a local non-exportable signature key is lost, an asset may further be transferred to a new account through a conversion institution account so that the user's asset is not lost.

Encryption keys are different encryption keys issued by the management end for each user end after user ends register at the management end through an identity authentication certificate or eID, and are stored and used by local wallets of the user ends. The encryption key may include a confidential transaction key, a secret shared sub-key, and a symmetric encryption key. The confidential transaction key may be used to encrypt and decrypt token amount related parameters (such as blinding factors) in user transaction data; the secret sharing sub-key may be used to encrypt and decrypt data such as identities of both parties of the transaction using a secret sharing algorithm; and the symmetric encryption key may be used to encrypt and store data such as identity information of a user end. In addition to the purpose explained above, one or more of the encryption keys may further be used to generate a transaction address. The secret sharing algorithm is a secret sharing solution using optional sub-keys, and an encryptor (the management end) may know N of secret sharing sub-keys. Using a secret sharing algorithm with a threshold of (2, N+1), one newly generated sub-key is released along with an encryption result, a secret message may be recovered based on any one of the N secret sharing sub-keys. Then, the secret message may be used as a key to encrypt shared data to be protected using a symmetric encryption algorithm. The secret sharing algorithm with a threshold of (2, N+1) indicates that the secret message is divided into N+1 parts of shared secret message, and any two or more of these parts may be used to recover the secret message. Therefore, N+1 sub-keys include a newly generated shadow sub-key. A user end with a secret shared sub-key may recover the secret message according to its own secret shared sub-key and the shadow sub-key issued along with the encryption result, and then uses the secret message to view the shared data. In the embodiment, the encryption key includes the three kinds of keys only for one embodiment, and in other embodiments, the encryption key may include only one or two kinds of keys, or may include four kinds of keys as long as the functions may be realized. Names of the keys are not limited to the names used in the embodiment, as long as they may be distinguished.

An Unspent Transaction Outputs (UTXO) model is used in the system of the embodiment. In the UTXO model, a transaction includes one or more inputs and one or more outputs. Each input is a reference to a forward unspent transaction output and corresponding unlocking script. When the reference to the forward unspent transaction output is unlocked, the reference cannot be unlocked again, that is, double costs cannot be used. Each output includes a token amount and a locking script. The locking script needs a corresponding unlocking script to unlock, that is, a new unspent transaction output is created. The locking script includes a transaction address and an unlocking manner, wherein the transaction address is acquired by using a public key of an asymmetric key through a one-way irreversible function, and the unlocking script is a signature of the transaction data by data of a public key and a private key corresponding to the transaction address, and the signature may be verified by using the public key. Lock scripts and unlock scripts may use a multi-signature.

In the embodiment, a private chain system at the management end may generate a state tree of the system, so that a present state of each user may be conveniently acquired. The state tree is generated by all present control data and transaction data, and records a present state of the system and a present state of each user. An asset state of a user in the state tree includes account balance maintained according to the user's UTXO transaction record, while a user end, a third party and a supervisor on the external public chain system may accumulate the transaction results according to the user's UTXO transaction record, thus acquiring the balance of the user. That is, the management end may search for the present state and account balance of the user according to the system state tree, while the user on the external public chain system must use all the transaction records of the user to acquire the account balance of the user. It may be seen that a method of using the asset state of the user on the private chain system at the management end is different from a method of using the asset state of the user on the external public chain system, but account balances acquired by the two methods are consistent. Because the state tree is only used on the private chain at the management end, the management end may conveniently acquire the present state of each user end through the state tree, and in order to provide a way for the user end, the third party, and the supervisor to acquire all transaction records of the user end from the external public chain, an account transaction chain is introduced, and retrieval of the account transaction chain is not only convenient and quick, but further can protect privacy of the user.

The following is a description of the account transaction chain.

In an optional embodiment, a data processing method of an account transaction chain, as shown in FIG. 4, includes following acts S1-S2.

In act S1, transaction data is verified.

The transaction data includes a transaction address of a transaction receiving end and an address parameter generated during a transaction of this time, wherein the transaction address is generated by using an address parameter generated when the transaction receiving end received a transaction last time, and the address parameter generated during the transaction of this time is used for generating a transaction address for the transaction receiving end to receive a transaction next time.

The transaction data is submitted to a management end by a user end. The management end mainly verifies validity of the transaction data, for example, including verifying validity of a user state, validity of an unlocking script, validity of a token amount, and whether the transaction address is a valid address.

In act S2, after the transaction data is verified to be passed, the transaction data is performed with an endorsement signature, and the transaction data after being performed with the endorsement signature will be written into block data of a first chain.

The endorsement signature at the management end is a signature of the entire transaction data submitted by the user end.

After the transaction data is chained up, all receiving transaction data at the same transaction receiving end will form a logical chain structure. The logical chain is hidden in generated account book data.

Optionally, the management end generates an initial address parameter (or referred to as a nonce value) for a user when registering and generates a receiving transaction address. When the user performs a transaction as a transaction receiving end, all the receiving transaction data of the user will form a logical chain. When the same user is issued a new key for generating a transaction address by the management end, the management end will generate an initial address parameter for the user again, and record a transaction address generated by a regenerated initial address parameter in a state tree, wherein the regenerated initial address parameter is matched with or is associated with the issued new key. After that, when the user performs a transaction as the transaction receiving end, all the receiving transaction data of the user will form a new logical chain. It may be seen that the receiving transaction data of the same transaction receiving end may have one or more logical chain structures. Each time a newly generated initial address parameter is encrypted and stored in control data, the user may look for a logic chain by himself according to the initial address parameter in the control data.

After performing the endorsement signature on the transaction data by the management end, the management end notifies a private chain system at the management end to chain up. A chain generation institution at the management end writes the transaction data into account book data of a private chain, and then generated block data is synchronized to a chain generation node of an external public chain. After the block data passes the verification, the chain generation node writes the block data into block data of a second chain through a consensus algorithm of the second chain.

Optionally, if there is a plurality of concurrent transactions for the same transaction receiving end, that is, there is a plurality of transaction data containing the same transaction address, the plurality of transaction data containing the same transaction address are brother nodes to each other in the chain structure.

Through the transaction address generated by the address parameter in the previous receiving transaction and the address parameter used to generate the next transaction address contained in the transaction data, the receiving transaction data of the same user end forms a logical chain with or without brother nodes, so that all receiving transaction data of the user end may be quickly retrieved, and since the transmitted transaction data refers to the receiving transaction data, all transaction data may be quickly acquired. At the same time, the transaction address is one-time and unique to different users, thus achieving the purpose of protecting identity privacy of the user.

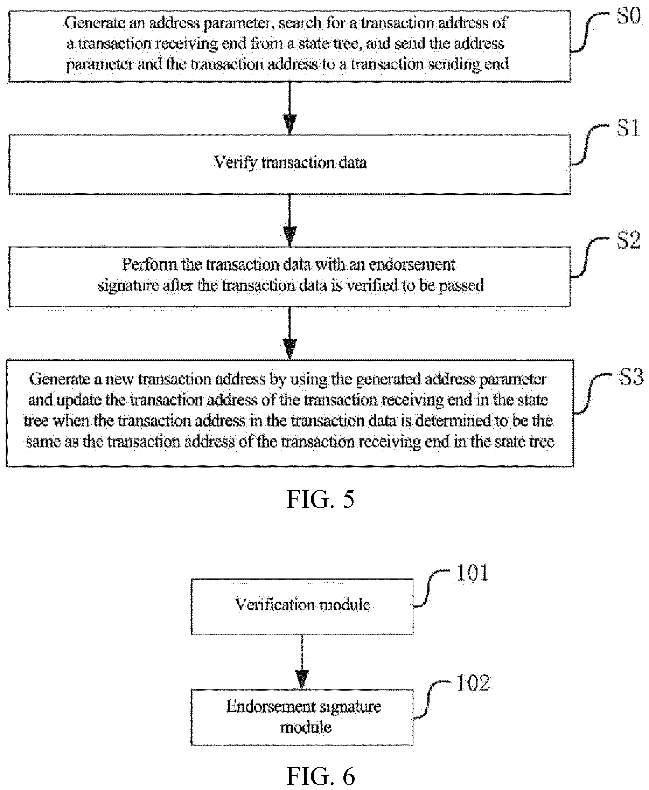

In an optional embodiment, as shown in FIG. 5, before verifying the transaction data (act S1), the method further includes act S0.

In act S0, an address parameter is generated, the transaction address of the transaction receiving end is searched from a state tree, the generated address parameter and the searched transaction address are sent to a transaction sending end, and the transaction sending end adds the transaction address and the address parameter to the transaction data.

After the being performed with the endorsement signature of the transaction data (act S2), the method further includes act S3.

In act S3, when the transaction address in the transaction data is determined to be the same as a transaction address of the transaction receiving end in the state tree, a new transaction address is generated by using the generated address parameter and the transaction address of the transaction receiving end in the state tree is updated.

If the transaction address in the transaction data is determined to be not the same as the transaction address of the transaction receiving end in the state tree, then the transaction address of the transaction receiving end has been updated and there is no need to update the transaction address of the transaction receiving end in the state tree.

In the optional embodiment, the transaction address is guaranteed to be up-to-date each time a transaction is received by storing the receiving transaction address with the state tree.

In an optional embodiment, the address parameter may be a random number; the new transaction address is generated by using the generated address parameter, including: the transaction address is generated by performing one or more operations on the generated address parameter and a key of the transaction receiving end by using a function. The same or different functions may be used for a plurality of operations.

In addition to using one or more of the encryption keys to generate the transaction address, the management end may issue a new key, for the user, dedicated to generating the transaction address.

Optionally, the transaction address of the transaction receiving end may be generated in the following first way: using a first function to perform an operation on the address parameter and a user key of the transaction receiving end to acquire a first intermediate value, using a second function to perform an operation on the first intermediate value and a user public key of the transaction receiving end to acquire a first public key, and using a third function to perform an operation on the first public key to acquire the transaction address.

For example, the first intermediate value (K) is generated by performing an operation on the address parameter and the user key of the transaction receiving end through a one-way irreversible function (i.e., the first function), the first public key is acquired through a scalar multiplication operation (i.e., the second function) on an elliptic curve with the first intermediate value (K) and the user public key, and the transaction address is generated through another one-way irreversible function (i.e., the third function) with the first public key.

Optionally, the transaction address of the transaction receiving end may be a multi-signature address, and the multi-signature address may be generated in the following second way: using different functions to perform an operation on the address parameter and the user key of the transaction receiving end to acquire a plurality of intermediate values, using a fourth function to respectively perform an operation on each intermediate value with a plurality of user public keys of the transaction receiving end to acquire a plurality of new public keys, and using a fifth function to perform an operation on the plurality of new public keys to acquire the multi-signature address.

For example, the address parameter and the user key of the transaction receiving end are performed an operation by a plurality of different one-way irreversible functions to generate a plurality of intermediate values (K'), a plurality of new public keys are acquired through a scalar multiplication operation (i.e., the fourth function) on an elliptic curve for each intermediate value and a plurality of user public keys of the receiving transaction end, and a plurality of new public keys are used to generate the multi-signature address through another one-way irreversible function (i.e., the fifth function). Each intermediate value has a one-to-one correspondence with a plurality of user public keys, so pluralities of different one-way irreversible functions have a one-to-one correspondence with a plurality of user public keys.

The one-way irreversible function may be, for example, a hash function or a combination of hash functions.

Operation functions in the first way and the second way may be the same.

In an optional embodiment, after receiving a key update request initiated by a user end, a management end issues a new encryption key after performing an identity authentication on the user end, initiates a conversion transaction process, enables a conversion institution account to initiate a transaction, signs the transaction data with a signature key of the conversion institution account, and generates a first unlocking script to convert an unspent transaction output in an original account of the user end into a new unspent transaction output. The first unlocking script is a special (or specific) unlocking script generated by a conversion institution, which is different from an unlocking script generated by the user end. By adopting the optional embodiment, the problem of asset loss caused by the loss of the local signature key by the user may be solved.

In an optional embodiment, the method may further include one or more of the following acts: generating a designated issuance transaction for issuing a token, wherein an input address in the designated issuance transaction is an address adopting a first format; generating a designated recycling transaction for recycling a token, wherein an output address in the designated recycling transaction is an address adopting a second format; generating a designated reward transaction for rewarding a token, wherein an input address in the designated reward transaction is an address adopting a third format.

The first format refers to a special address format without a context of UTXO address, i.e. an input does not need to refer to an unspent transaction output, and an output cannot be used as the input and may be pre-agreed. Similarly, the second format and the third format are similar.

By adopting the method of the embodiment, since all receiving transaction data of the same transaction receiving end form a logical chain structure, and all transmitted transactions of the receiving end need to refer to the receiving transaction data, all transaction data of the receiving end may be retrieved after acquiring a relevant key.

A management end apparatus for implementing the method of the embodiment may include a verification module 101 and an endorsement signature module 102, as shown in FIG. 6.

The verification module 101 is configured to verify transaction data.

The endorsement signature module 102 is configured to perform an endorsement signature on the transaction data after the verification by the verification module passes, and the transaction data after being performed with the endorsement signature will be written into block data of a first chain system.

The transaction data includes a transaction address of a transaction receiving end and an address parameter generated during a transaction of this time, wherein the transaction address is generated by using an address parameter generated when the transaction receiving end received a transaction last time, and the address parameter generated during the transaction of this time is used for generating a transaction address for the transaction receiving end to receive a transaction next time; and all receiving transaction data at the same transaction receiving end form a logical chain structure.

Transaction data containing the same transaction address in the chain structure are brother nodes to each other.

In an optional embodiment, the apparatus may further include a first address generation module configured to generate an address parameter, search for the transaction address of the transaction receiving end from a state tree, and send the generated address parameter and the searched transaction address to a transaction sending end; and is configured to generate a new transaction address by using the generated address parameter and update a transaction address of the transaction receiving end in the state tree when the transaction address in the transaction data is determined to be the same as the transaction address of the transaction receiving end in the state tree.

In an optional embodiment, the first address generation module uses the generated address parameter to generate a new transaction address, including: the first address generation module uses a function to perform one or more operations on the generated address parameter and a key of the transaction receiving end to generate the transaction address.

Optionally, the first address generation module generates the transaction address of the transaction receiving end in the following first way: the first address generation module uses a first function to perform an operation on the address parameter and a user key of the transaction receiving end to acquire a first intermediate value, uses a second function to perform an operation on the first intermediate value and a user public key of the transaction receiving end to acquire a first public key, and uses a third function to perform an operation on the first public key to acquire the transaction address; or the first address generation module generates the transaction address of the transaction receiving end in the following second way and the transaction address of the transaction receiving end is a multi-signature address, the first address generation module uses different functions to perform an operation on the address parameter and the user key of the transaction receiving end to acquire a plurality of intermediate values, uses a fourth function to respectively perform an operation on each intermediate value with a plurality of user public keys of the transaction receiving end to acquire a plurality of new public keys, and used a fifth function to perform an operation on the plurality of new public keys to acquire the multi-signature address.

In an optional embodiment, the first address generation module is further configured to generate an initial address parameter of the user when the user is registered, and record a transaction address generated by the initial address parameter in a state tree; and the first address generation module is further configured to regenerate an initial address parameter for a user issued with a new key, and record a transaction address generated by the regenerated initial address parameter in the state tree, wherein the new key is a key for generating a transaction address.

In an optional embodiment, the apparatus further includes a key issuance module and a conversion transaction module.

The key issuance module is configured to receive a key update request initiated by a user end and issue a new encryption key after performing identity authentication on the user end.

The conversion transaction module is configured to initiate a conversion transaction process, enable a conversion institution account to initiate a transaction, sign the transaction data through a signature key of the conversion institution account, and generate a first unlocking script to convert an unspent transaction output in an original account of the user end into a new unspent transaction output.

Optionally, when the user initiates registration, the key issuance module will issue a new encryption key after performing identity authentication on the user end.

The apparatus further includes one or more of the following modules: an issuance transaction module, a recycling transaction module, and a reward transaction module.

The issuance transaction module is configured to generate a designated issuance transaction for issuing a token, wherein an input address in the designated issuance transaction is an address adopting a first format.

The recycling transaction module is configured to generate a designated recycling transaction for recycling a token, wherein an output address in the designated recycling transaction is an address adopting a second format.

The reward transaction module is configured to generate a designated reward transaction for rewarding a token, wherein an input address in the designated reward transaction is an address adopting a third format.

The management end apparatus may be a computer device including a processor, a memory, and a computer program stored in the memory and executable on the processor, wherein the processor may implement some or all of the acts of the embodiment when executing the program.

In the embodiment, in a block chain system with the management end, the receiving transaction data of the user end is formed into a logical chain with or without brother nodes, so that all the receiving transaction data of the same user end may be quickly retrieved, and then all the transaction data of the user end may be retrieved, at the same time, the user end has a characteristic of having a one-time transaction address, and the purpose of protecting the identity privacy of the user is achieved.

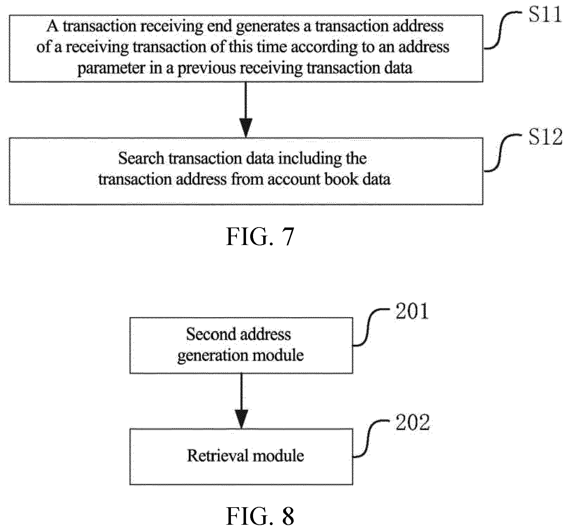

The following example describes a data processing method of a user end, as shown in FIG. 7, including following acts S11-S12.

In act S11, a transaction receiving end generates a transaction address of a receiving transaction of this time according to an address parameter in a previous receiving transaction data.

In act S12, transaction data including the transaction address is searched from an external second chain system; block data in the external second chain system is composed of one or more block data sequentially of a first chain system, and a state of any account on the first chain system is consistent with a state of the account on the second chain system.

Since all the receiving transaction data of the same transaction receiving end form a logical chain structure, the transaction receiving end may generate the transaction address of the receiving transaction of this time according to the address parameter in the previous receiving transaction data, and may quickly find the transaction data of this time according to the transaction address of the receiving transaction of this time. At the same time, since the transaction address is one-time, user privacy of the transaction receiving end is protected.

In an optional embodiment, the method further includes: the user end compares an account state acquired from a state tree through the management end with an account state acquired from the second chain system by itself.

In an optional embodiment, when the transaction receiving end is used as a transaction sending end, the method further includes: when the transaction sending end submits a transaction, a public-private key pair is generated by using the address parameter in the previous receiving transaction data referencing the receiving transaction data (the public key is the public key generated by the first or second way, and public keys are consistent to ensure the same address), and an unlocking script is generated in a present transaction using the public-private key pair.

A user end apparatus for implementing the method of the embodiment may include a second address generation module 201, a retrieval module 202, and a verification module 203, as shown in FIG. 8.

The second address generation module 201 is configured to generate a transaction address of a receiving transaction of this time according to an address parameter in a previous receiving transaction data.

The retrieval module 202 is configured to search for transaction data including the transaction address from a second chain system.

In an optional embodiment, the user end apparatus may further include a verification module configured to compare an account state acquired from a state tree through the management end with an account state acquired from the second chain system by itself.

In an optional embodiment, the user end apparatus may further include a signature module, which is configured to generate a public-private key pair (the public key is the public key generated by the first way or the second way) by using the address parameter in the previous receiving transaction data referencing the receiving transaction data when submitting a transaction when the user end is used as a transaction sending end, and generate an unlocking script in the transaction by using the public-private key pair.

The user end apparatus may be a computer device including a processor, a memory, and a computer program stored in the memory and executable on the processor, wherein the processor may implement some or all of the acts of the embodiment when executing the program.

According to the embodiment, based on the receiving transaction data chain of the same user end, all receiving transaction data of the same user end may be quickly retrieved, and then all transaction data of the user end may be retrieved.

The following embodiment describes a data processing method of a conversion apparatus, including: initiating a conversion transaction, signing the transaction data by using a signature key of a conversion institution account, generating a first unlocking script to convert an unspent transaction output in an original account of a user end into a new unspent transaction output, verifying the transaction data formed by the transaction initiated by the conversion institution account to be passed and performing an endorsement signature on the transaction data, writing the transaction data into block data of a first chain system, writing the block data of a first chain into block data of an external second chain system. The block data of the second chain system is sequentially composed of one or more block data of the first chain system, and a state of any account on the first chain system is consistent with a state of the account on the second chain system.

The conversion transaction initiated by the conversion apparatus requires a management end apparatus to initiate a transaction flow to enable the conversion apparatus before the conversion apparatus may initiate the conversion transaction.

The conversion apparatus for realizing the method includes an initiation module and a signature module.

The initiation module is configured to initiate a conversion transaction according to enabling of the management end apparatus.

The signature module is configured to use a signature key of a conversion institution account to sign the transaction data and generate a first unlocking script to convert an unspent transaction output in an original account of the user end into a new unspent transaction output.

Transaction data formed by a transaction initiated by the conversion institution account is written into block data of a first chain system after being verified to be passed and performed with an endorsement signature, the block data of the first chain system is written into block data of an external second chain system, the block data of the second chain system is sequentially composed of one or more block data of the first chain system, and a state of any account on the first chain system is consistent with a state of the account on the second chain system.

The following embodiment describes a data processing method at a management end and a data processing method at a user end together.

A transaction address in a system of the embodiment may be acquired by following process: an operation is performed on a Value of K (i.e. an intermediate value) calculated by an address parameter and a user key with a signature public key of the user end through a one-way irreversible function, such as scalar multiplication on an elliptic curve, to acquire a new public key, and the transaction address is acquired through another one-way irreversible function for the new public key, which is referred to as a public key corresponding to the transaction address. A private key corresponding to the new public key may be acquired by performing an operation, such as multiplication in a finite field, on the Value of K and a signature private key of the user end. However, the transaction addresses in the receiving transaction data of the same user end are all acquired through different calculated values of K and have a characteristic of one-time addresses. Therefore, an external cannot track a relevant identity of a user through relevant information of the transaction address, but may verify an unlock signature of the user. Similarly, the method for generating the transaction address in the embodiment may be used for a multi-signature address (i.e., an address generated by a plurality of different public keys), and only the second way needs to be used for relevant operations.

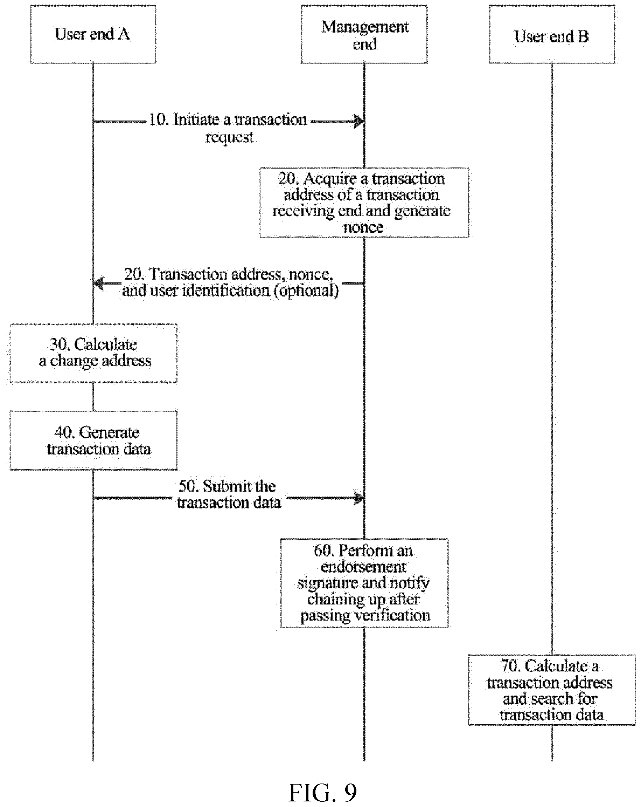

The following describes a data processing method of a block chain system in an example, as shown in FIG. 9, including following acts 10-70.

In act 10: a user end A submits a transaction request with a user end B to a management end.

The embodiment takes a transaction receiving end as the user end B as an example to illustrate, and there may be a plurality of transaction receiving ends.

In act 20, the management end acquires a transaction address of the user end B from a system state tree and randomly generates a nonce value, and sends the transaction address and the nonce value to the user end A as an output address and a nonce value of a transaction of this time.

Similarly, if the user end A wants to perform transactions with a plurality of receiving ends, that is, in act 10, a transaction request with a plurality of receiving ends is submitted, then the management end may transmit transaction addresses corresponding to a plurality of receiving ends to the user end A.

Optionally, the management end may encrypt and send a user identification corresponding to the transaction address (in the embodiment, the user identification corresponding to the transaction address is a user identification of the user end B, in other embodiments, if there is a plurality of outputs, each transaction address corresponds to one user identification) to the user end A using a secret sharing algorithm, secret sharers are the user end A, the user end and the management end corresponding to the transaction address, and only a secret sharing sub-key of the three may decrypt data. The user end A decrypts plaintext of the user identification and verifies whether it is correct, and includes a user identification of the ciphertext in corresponding transaction data, so that a user identification of an output address may be traced under a condition of having a key.

Optionally, the management end may encrypt and send a user identification of the user end A to the user end A using a secret sharing algorithm. Secret sharers are the user end A and the management end, and only a secret sharing sub-key of the two may decrypt data.

The value of K is acquired from a nonce value and a key of a user end (e.g. a symmetric encryption key) through a one-way irreversible function, and further a new transaction address of the user is acquired according to the method described above. The value of K may be referred to as a value of K corresponding to a transaction address, and the nonce value may be referred to as a nonce value corresponding to the transaction address. The management end needs to ensure that a new transaction address of a user of the transaction of this time calculated through the nonce value is unique within the system.

When the user registers, the management end will generate an initial nonce value of the user, encrypt and store it in a control data set using the user's key (such as a symmetric encryption key), and record a transaction address of the user, that is, a first receiving transaction address of the user, generated through the nonce value in the system state tree.

In act 30, the user end A may calculate its own change address using a nonce value in last receiving transaction data in a local wallet, and the change address is a receiving transaction address of the user end A. The generation method is the same as that of the transaction address in act 20. When it needs change for itself, the change address will be taken as an output address of a transaction of this time (one of a plurality of outputs of a transaction).

The act is optional. If the user end A needs change, the act is executed. If it does not need change, act 40 is directly executed after act 20.

In act 20, the management end encrypts and sends the user identification of the user end A to the user end A using the secret sharing algorithm, wherein the secret sharers are the user end A and the management end. Thus, the transaction data further includes a user identification of the ciphertext corresponding to a change address.

Since an input of a UTXO model refers to an unspent transaction output, a user identification of ciphertext of a transaction input may be traced back through including a user identification of ciphertext corresponding to an output address.

In act 40, the user end A acquires a value of K corresponding to a transaction address of an unspent transaction output referenced by an input of a transaction of this time, acquires a public-private key pair corresponding to the transaction address according to the method described above, signs transaction data without an unlocking script using the private key, and generates an unlocking script corresponding to the unspent transaction output together with data of the public key. The transaction data includes the transaction output address and nonce value of act 20 and, if any, the change address of act 30. Except that a token amount is ciphertext of a confidential transaction and a user identification (optional) corresponding to an output address is ciphertext, the rest of the data is plaintext. The user end A submits transaction data containing an unlocking script to the management end. The transaction data containing the unlocking script submitted by the user end A to the management end includes: version information, referenced unspent transaction output and corresponding unlocking script, a user identification of ciphertext (optional), token data of ciphertext, a locking script, a nonce value (acquired in act 20), and a timestamp. The locking script includes: a transaction output address and an unlocking method.

In the method of the embodiment, since the transaction data includes a one-time transaction address (calculated based on the nonce value of the previous receiving transaction) and a nonce value (used to generate a transaction address of a next receiving transaction), for the same user, all receiving transaction data of the user, that is, an unspent transaction output, form a logical chain with or without brother nodes. However, a value of K corresponding to a transaction address output by the unspent transaction may be calculated by referring to a nonce value in previous receiving transaction data of the receiving transaction data, and the calculation method is the same as that of calculating the K value in act 20.

In act 50, the management end verifies validity of the transaction data submitted by the user end A, including verifying validity of a user state, validity of an unlocking script, validity of a token amount, and whether the transaction address is a valid address.

When the management end verifies whether the transaction address is a valid address, it may query from user transaction addresses in the system state tree and a cache of newly generated transaction addresses within expiration time of a cache at the management end to verify whether the transaction address is an address of corresponding user and has not expired.

In act 60: after the transaction data passes the verification, the management end performs an endorsement signature on the transaction data and notifies a private chain system at the management end to chain up. A chain generation institution at the management end writes the transaction data after being performed the endorsement signature into account book data of a private chain, and then the generated block data is synchronized to a chain generation node of an external public chain.

The management end verifies whether a user transaction address in the transaction data and a user transaction address in the system state tree are the same when notifying chaining up, if so, a value of K is acquired through a one-way irreversible function by using a nonce value of the transaction and a key of the user end (such as a symmetric encryption key), and then a corresponding transaction address is acquired, wherein the generation method is the same as that of the transaction address in act 20; and updates a corresponding user transaction address in the system state tree by using the transaction address.

Thus, for the same receiving user end, a next receiving transaction address is calculated from the nonce value and the user key in the receiving transaction data of the user of this time, while an initial nonce value of the user is encrypted and stored on a chain at the time of registration. Therefore, the user may calculate a first receiving transaction address by acquiring the initial nonce value, acquire the receiving transaction data through the address, and calculate the next receiving transaction address through the nonce value in the transaction data, thus making the user's receiving transaction data form a logical chain through the nonce value and the transaction address.

When a plurality of user ends initiate concurrent transactions for the user, transaction addresses acquired by the management end from the system state tree are the same address; only when first submitted transaction data is passed, will a transaction address in the system state tree be modified to a next address. Therefore, there is a case where the same address is used in the concurrent transactions, and the receiving transaction data with these same addresses form brother nodes on the logical chain.

A local wallet of the user end may acquire all the receiving transaction data of the user according to the initial nonce value of the user. And since all the user's sending transactions in a UTXO model need to refer to corresponding unspent transaction output as an input, that is, to refer to the receiving transaction data, the user may retrieve all the receiving transaction data, and may retrieve all the sending transaction data through the reference of related transactions. The local wallet of the user end stores a relationship of the logic chain, and a transaction address in one receiving transaction of the user end is calculated by a nonce value in corresponding previous receive transaction data, which explains that in act 40, the user may directly find the nonce value of the previous receiving transaction data of the unspent transaction output, and then may unlock the unspent transaction.

In act 70, the user end B calculates a transaction address through a nonce value of the last receiving transaction data in a local wallet, and queries account book data using the transaction address to find data of the transaction of this time. The transaction output address together with a locking script generates a new unspent transaction output, and only the user end B may generate a corresponding unlocking script, while the outside does not know an association between the transaction address and the user end B.

As may be acquired from above that the output address of the transaction of this time is calculated from a nonce value of a previous receiving transaction of the user end. Therefore, the transaction address calculated by the local wallet of the output user end according to the nonce value of the last receiving transaction data is output, and the transaction data of the address is searched on an external public chain. When the transaction data of this time is chained up and written into account book data, the transaction data of this time may be found through the address. The searching process does not rely on any message notification mechanism or the management end. The user end may search by itself on the external public chain according to the transaction address.

An input of each sending transaction of the user end needs to refer to a corresponding unspent transaction output, and there is no order correlation, so the sending transaction of the user end may further be operated concurrently and has a function of preventing replay attacks.

By adopting the method of the embodiment, the user end, the chain generation node, the third party, the supervisor and the like may all verify validities of an endorsement signature at the management end of each transaction in the transaction data of the external public chain and an unlocking signature of the user end, and verify a confidential transaction amount by ciphertext, but do not know corresponding user information and the transaction amount, and do not know a account transaction chain of the user, thus achieving the purpose of protecting privacy of user data.

The local wallet of the user end is a lightweight wallet. Only block header data of the external public chain need to be synchronized, and then encrypted user identity information and an encrypted initial nonce value in control data are acquired to acquire relevant information of the user and an account transaction chain without synchronizing other data irrelevant to the user. The amount of data in the block header of the public chain is very small, and the user only needs to synchronize a small amount of data to fully meet storage requirements of mobile devices. According to the data in the block header, the user end may further use a Simplified Payment Verification (SPV) to verify an existence of the transaction. Only a small amount of hash calculation results of other transaction data are required. Moreover, the user end or the management end only needs to authorize corresponding encryption keys, so that the supervisor and the third party may acquire the account transaction chain of the user on the external public chain and quickly retrieve all transaction data related to the user. In the system, only the private chain at the management end and the chain generation nodes of the external public chain need to store all the block data. Under a condition of ensuring safety of the account book data, storage redundancy of the account book data is greatly reduced, and relevant resources are saved.

In an optional embodiment, the system may set up a conversion institution account with a special public identity. Its function is that when the user only has a non-exportable local signature key, which is lost, the user end generates a new signature key locally and updates user information in the system through an updated identity authentication certificate or eID, and the management end issues a new encryption key and generates a new initial nonce value (updates the account transaction chain). However, since the new signature key of the user end cannot unlock a previous locking script, a special conversion transaction needs to be generated by the conversion institution account. The conversion transaction is initiated by the system at the management end after the management end approves the update of the user. The conversion transaction includes only one input and one output. The input of the transaction refers to an unspent transaction output of an original account of the user. The output of the transaction is a newly generated transaction address of the user. The conversion institution account signs the transaction data and generates a special first unlocking script to convert an unspent transaction output of the original account of the user into a new unspent transaction output. In the way, the problem of asset loss after the loss of the local signature key of the user may be solved by the conversion transaction. The conversion transaction is the same as an ordinary transaction except for the special unlocking script, so the outside does not know the corresponding user information and transaction amount to protect the identity privacy of the user. The special unlocking script uses a signature of a conversion institution account with a public identity, so the outside may verify the signature and know that the transaction is a conversion transaction. The conversion transaction is linked to a new account transaction chain of the user according to the chain structure described above. Since the conversion transaction is initiated by the system at the management end, it is necessary to monitor whether the input and output of the conversion transaction are transaction addresses of the same user. The management end authorizes a corresponding key to the supervisor (or a K-value parameter, a corresponding address generated by an operation result of a certificate signature public key for verifying the user and a K-value), and the supervisor may verify on the external public chain.

In an optional embodiment, a user key and a certificate of the system may have a periodic update mechanism and the account transaction chain of the user is updated at the same time. Therefore, all unspent output on a previous account transaction chain will be transferred to a new account transaction chain. Therefore, the transaction data in old block data will no longer have unspent output due to updating, and the management end may archive and clip the old block data through policies. Because a client end rebuilds an account transaction chain, a data amount at the client end may be kept in a controllable range for a long time.

In the example, the account transaction chain is associated with all the receiving transactions of the user. In order to enable all the sending transactions of the user to be finally associated with the account transaction chain, an amount greater than a required amount may be input, so that in act 30, a change output may be provided, or a change output with an amount of zero may be forcibly output (the unspent output needs to be transferred to the new account transaction when updating the account transaction chain, so a zero output is avoided as much as possible). In the way, all the sending transactions will generate a change output, which will be linked to the account transaction chain of the user, thus linking all the user's transactions to the account transaction chain.

The transaction data of the user end may be synchronized to the chain generation node of the external public chain in a short time (the time when the private chain generates a data block and synchronizes to the chain generation node). At the time, the user end may query transaction information and acquire the transaction data by a receiving transaction address, and verify the endorsement signature at the management end, the unlocking signature at the user end and the transaction amount. However, the transaction data at the time has not been added to the external public chain yet. In a condition of small transaction, the user may consider the transaction is successful. In order to ensure a success of a large transaction, one may wait for a period of time until the transaction data is added to the external public chain and several confirmations have been undergone. After verifying relevant information through a SPV, one may consider that the transaction must exist and cannot be tampered with or reversed.

In the system of the embodiment, signature keys and symmetric encryption keys at the management end, the user end and the institution, including corresponding algorithms, may all be updated, because there is no mutual dependency, so some updates of the user will not cause a problem of unavailability. The secret sharing sub-key and the confidential transaction key will not cause the problem of unavailability if some updates of the user keys. Updating the secret sharing algorithm may simultaneously issue keys corresponding to the old and new algorithms for the user end, and then the new secret sharing algorithm is enabled at a block height, so it will not cause the problem of unavailability. However, updating the confidential transaction algorithm will lead to a problem that users of the old and new algorithms cannot trade with each other, and if the updating algorithm causes the transaction amount not to be verified in ciphertext, it will lead to a problem that a total amount of tokens in the system is uncertain. In order to ensure that the total amount of tokens in the system is certain, updating of the secret transaction algorithm may adopt a strategy of recycling and reissuing. Since the old and new confidential transaction algorithms cannot communicate with each other, it may be considered that tokens of the old and new algorithms are equivalent but different. By gradually recycling and reissuing equivalent old and new tokens to an issuance institution, and the old and new tokens are recycled and issued to the user through the issuance institution, there are transactions of the old and new tokens existing in the system, the system may gradually complete replacement of the old and new tokens, and the total amount of the old and new tokens in the system may be ensured to be certain during the replacement process. The hashing algorithm of the system may enable a new hashing algorithm at a block height, and the system may gradually complete the transition by replacing old addresses with new addresses. The above may be adopted some updates of the user, i.e. the system may adopt a mechanism of batch-by-batch updating. If the user's account transaction chain needs to be updated, a new key for generating a transaction address and a new initial nonce value are issued and may be specified to take effect at a block height. Therefore, all cryptographic algorithms of the system may be updated, and in the future they may be updated and upgraded to quantum computation resistant cryptographic algorithms with security guarantees.

The private chain system at the management end is not limited to the private chain system, but may further adopt a manner of an alliance chain. However, the external public chain system is not limited to the public chain system, but may further adopt a manner of an alliance chain, and may strengthen security of the data. The following examples are given.

In order to ensure safety of the data and prevent a problem of privacy disclosure caused by the user key being cracked in quantum computers, an external public chain system may adopt a manner of an external alliance chain. Plaintext data in control data is disclosed to the public, but encrypted data and encrypted initial nonce value related to the user's identity privacy are not disclosed to the public. Input reference and output address data and timestamp data in the transaction data are disclosed to the public, and a transaction amount, an address parameter, and an optional encrypted user identification is not disclosed to the public. Block header data of an external system is disclosed to the public. Since a manner of consensus in an alliance chain is certain, once consensus is reached, it is irreversible, all user ends, third parties and supervisors synchronize the block header data of the external system and may quickly perform mutual verification (for example, comparing a secret message with a hash value of the block header data from an initial block number to a designated block number and a hash operation result generated from the block header data from the designated block number to a final block number), so the block header data is considered credible. Moreover, for the non-public data (the transaction amount, the address parameter, and the optional encrypted user identification) in the transaction data, non-public data needing a signature in the transaction data may be replaced by a hash operation result that prevents quantum computation from cracking, and the replacement data is further used for the input reference. In the way, the outside may verify whether a transaction refers to an unspent output and has no double costs through an input reference and an output address of UTXO, and may acquire time information of the transaction, as well as verify the endorsement signature at the management end of the transaction data and the unlocking signature of the user end. The user end, the supervisor and the chain generation node can acquire the non-public data to complete verification of the transaction amount (ciphertext verification), and the user end only can acquire non-public data in its own relevant transaction data, and the user end may further check whether the transaction data exists through a SPV verification. Calculating a K-value parameter of a next receiving transaction address through a nonce value and an encryption key may adopt a hash operation that prevents quantum computation from cracking, that is, for a plurality of users in the same transaction, an account transaction chain of another user cannot be acquired through shared information. And since the block header data is trusted, only a hash operation result of another transaction data need to be acquired for the SPV verification, so a purpose that user data is trusted is achieved without disclosing key information. Even if a key corresponding to an input reference and an output address of a public UTXO is cracked due to an appearance of a quantum computer, since a transaction amount and an address parameter are not disclosed, related transaction amount cannot be acquired, and it is unknown that related output address is acquired through a public key operation of which user. Because all user public keys have related possibilities (corresponding values of K may be found), and an account transaction chain of a user cannot be acquired, thus protecting the identity privacy of the user. In a condition of a multi-signature address, different manners need to be adopted to generate different values of K for generating a K-value parameter related to each public key of the multi-signature address, to avoid privacy leakage caused by using the same K-value. The non-public data in the control data and the transaction data may be replaced with a hash operation result that prevents quantum computation from cracking when a Merkle Tree root hash is calculated, and the third party may verify correctness of a chain to prevent tampering. Since a cryptographic algorithm of the system may be updated, it may be updated and upgraded to a quantum computation resistant cryptographic algorithm with security guarantee in the future, which may make the system smoothly transition and will not reveal privacy of a user of previous transaction data because of public data.

Verification of a transaction on an external public chain may be divided into two acts. The first act is to verify whether an input reference of the transaction is correct, there are no double costs, validity of a block header, etc. The act only needs to verify the input reference and an output address, as well as a hash operation result of block data. The verification speed is very fast. Even for an external alliance chain, the part of data is completely open and transparent, so it may be used as an open verification service. The second act is to verify a signature of transaction data and a transaction amount. The verification speed is relatively slow, and some of non-public transaction data is needed for verifying the transaction amount when it is for the external alliance chain. Since the transaction data are independent of each other, parallel verification may be used. A chain generation node may adopt a corresponding strategy to avoid performance bottlenecks caused by massive data.

In the embodiment, in order to encourage and ensure that data recorded on a public chain conforms to rules of a system, a private chain at a management end issues a consensus reward and synchronizes it to the public chain. A consensus reward process of the system may include: the management end acquires relevant information of a chain generation node to be rewarded on the public chain, waits for confirmation of block data of a plurality of (e.g. 6) public chains, explicitly issues rewards to corresponding accounts in control data, and then generates a special reward transaction in transaction data according to reward information in the control data (see issuing a token of a system below). It may be seen that the consensus reward on the public chain will be issued by the management end in a following data block, and the reward is irreversible, and reward rules are determined by the management end. The chain generation node saves a receiving transaction address generated by an address parameter of a last account transaction chain in information of a generation chain, and the management end will issue a corresponding consensus reward to a corresponding address, so a reward transaction is on the account transaction chain of the user.

Change of a total amount of tokens in the system is controlled by the management end. The management end explicitly issues or recycles a corresponding quantity of tokens in the control data, and generates a special issuance or recycling transaction through a designated issuance institution. The special transaction may be generated in subsequent transaction data only after corresponding plaintext information (an address of the issuance or recycling, plaintext of a transaction amount, and a relevant K-value parameter, etc., of this time) of the issuance or recycling is released in the control data. If it is issuance, an input refers to a specific issuance address of this time, a corresponding amount is a corresponding amount plaintext in the control data, and an output address is a public key of the issuance institution and an address of a K-value calculation (belonging to an account transaction chain of the issuance institution), and a corresponding ciphertext amount. If it is recycling, an input refers to a public key of the issuance institution and an address of a K-value calculation (belonging to an unspent output of the issuance institution), and an output address is a specific recycling address of this time, a corresponding amount is a corresponding amount plaintext in the control data, and a balance is output in ciphertext manner. A reward transaction is similar to an issuance transaction. A special transaction may disclose a part of parameters and may verify a confidential transaction with a partial plaintext. It may be seen that both the issuance (or rewarding) transaction and the recycling transaction need to be attended by a specific address, such as for issuing (10...OX), for recycling (20... OX), and for rewarding (30... OX), where X indicates increment. These specific addresses do not have a context relationship of a UTXO address. An input does not need to refer to an unspent transaction output, and an output cannot be used as the input. Moreover, the issuance or rewarding transaction only needs an endorsement signature of a management end, and the recycling transaction needs an unlocking signature of corresponding issuance institution and the endorsement signature of the management end. Through the issuance or recycling of these specific addresses, a purpose of adjusting a total amount of tokens in the system is achieved, and all the information is explicitly disclosed to facilitate supervision. Optionally, after corresponding plaintext information is issued in the control data, it may take effect only after a certain proportion of chain generation nodes of a public chain vote for confirmation. A voting result is recorded on the public chain, i.e. the public chain may contain extended data of the public chain, such as the voting result, in addition to block data of a private chain. However, the extended data is only a data state of the public chain itself and will not affect a difference in a logic state between the public chain and the private chain. The block header data of an external public chain includes a Merkle Tree root hash generated by transaction data in a block of a private chain, a Merkle Tree root hash generated by control data, block header data of the private chain, and extended data of a public chain, and a hash value, a block number, a timestamp, a consensus parameter, etc. of a block header of a previous public chain. The block header data of the public chain may be quickly verified on the public chain, and the block header data of the private chain at the management end may be quickly verified, and the block header data of the private chain has a relevant signature to prevent forgery. The management end can generate a relevant special transaction in transaction data only after verifying voting information on the public chain.

In the embodiment, in order to effectively supervise the system of the embodiment, automatic supervision and/or supervision with human participation may be adopted. Automatic supervision is mainly to supervise transaction data, verify whether a transaction is legal (e.g. whether an account is frozen, whether a certificate has been cancelled, expired, etc.), whether an endorsement signature at a management end and an unlocking signature at a user end are correct, whether a confidential transaction amount is correct, whether there is relevant information in previous control data for an issuance or recycling transaction, and whether an input and output of a conversion transaction are a transaction address of the same user. Both automatic supervision and a chain generation node may verify validity of a transaction amount to ensure that a total amount of tokens in a system is certain. However, a part of supervision with human participation is to supervise explicit information issued in control data, mainly including whether an issued token amount is legal, for example, a management end needs to have a relevant asset mortgage or a deposit certificate to issue a corresponding token; another part of supervision with human participation is to supervise account information of some users in a system. The management end may authorize an encryption key of a corresponding user end to a supervisor, and the supervisor may acquire an account transaction chain and asset information of the user.

As may be seen from the above, the account transaction chain and the block chain are different. The block chain is of data entity, external, and public, while the account transaction chain is logical, internal, and hidden. The block chain solves problems of traceability and non-tampering, while the account transaction chain solves problems of privacy and ease of use, and countless account transaction chains are integrated into the block chain.

The centralized and decentralized system may be regarded as a block chain system with a management end. Transferring data between a plurality of block chain systems with management ends may be realized by establishing secret channels among the management ends of the plurality of systems. Important data may not be stored on the secret channels, the secret channels only serve as channels for data negotiation and triggering inter-chain flow, and user contract data are stored on respective block chain systems. Therefore, a user end may query relevant contract data on an external public chain and associate contract data of transferring data among different systems through cross-link contract IDs, so that a wallet of the user end may acquire association information of the cross-link contract. The secret channels may be realized by establishing alliance chains among a plurality of management ends.

When transferring data among a plurality of block chain systems, both parties of a transaction need to register in a system to be transferred. For example, a user A registers to management ends of a system SA and a system SB, and a user B registers to the management ends of the system SA and the system SB. Since the user ends of both parties of the transaction do not know who is an opposite party of the transaction, a statement of a custody contract is required. The statement of the custody contract is similar to the transaction. Assets of a user will be transferred to a custody account of the user after the statement is signed by a user end and take effects after being performed an endorsement signature and chained up by a management end. A separate transaction chain of the custody account of the user may be established in the manner described above for the custody account of the user. A signature key of the custody account may be managed by a third party or the management end, which may be used when the management end triggers a custody account transaction. Fairness of a custody contract transaction is guaranteed by alliance chains among the management ends, and a contract transaction needs to include a cross-chain contract ID. A wallet of a user end may acquire all custody transactions through a custody account transaction chain on a public chain, and through a cross-link contract ID in a contract transaction, a contract transaction related to the cross-link contract ID may be queried in a transaction chain of the custody account of a user on another public chain corresponding to the transferring. An execution situation of a relevant contract may be analyzed after the wallet of the user end acquires information of a statement of a custody contract and transaction information of a transferring contract in two systems respecti vel y.

In the example, among a plurality of block chain systems with management ends, a cross-chain contract transaction between user ends of both parties of a transaction will not affect a change of a total amount of tokens in their respective systems, but is only a process of transferring tokens for different users in both systems. Both a chain generation node and a supervisor may verify validity of a transaction amount of a custody contract in their respective systems to ensure that a total amount of tokens in a system is certain. Among a plurality of block chain systems with management ends, after the management ends establish alliance chains with each other, the user data may be transferred between the systems, and the transferred data are recorded on corresponding public chains, may be searched and verified, and is convenient for supervision.

The example is an account transaction chain formed by a transaction address of a UTXO model, and an account transaction chain may be formed in a similar manner. The following is an example that a system is an account balance model. When the system is the account balance model, since there is no concept of input reference address and output address, only a user account identification and a corresponding transaction amount are included in transaction data, and there is no dependency relationship between a sending transaction and a receiving transaction of a user end, so the transaction data of the user end may form a sending chain and a receiving chain with or without brother nodes through a sending transaction ID and a receiving transaction ID. The sending transaction ID is generated by a nonce value of a previous sending transaction of the user end and an encryption key of the user end through a one-way irreversible function, and the sending transaction ID is unique in the system. The receiving transaction ID is generated by a nonce value of a previous receiving transaction of the user end and an encryption key of the user end through a one-way irreversible function. In the system, receiving transaction IDs of different user ends are unique, but due to existing concurrent transactions, different receiving transactions of the same user end have the same receiving transaction ID. When the user end registers to the management end, the management end generates a random initial nonce value and an initial receiving transaction ID, and uses a symmetric encryption key of the user end for encryption and storage. During a transaction, a sending transaction ID is generated from the nonce value and the encryption key of the user end through a one-way irreversible function. The nonce value is randomly generated by the management end, and it is ensured that a next sending transaction ID and a receiving transaction ID (for a receiver) calculated are both unique in the system. The initial receiving transaction ID is an ID of a first receiving transaction of a user. When there is a receiving transaction ID of a user that is equal to a receiving transaction ID of the user in a state tree, the receiving transaction ID in the state tree is updated with a receiving transaction ID generated from a nonce value of a transaction and an encryption key of the user. It may be seen that a sending transaction ID depends on a nonce value (or an initial nonce value) of a previous sending transaction, and a concurrent transaction cannot be performed to prevent replay attacks, so a sending chain is formed. And a receiving transaction ID uses a receiving transaction address manner similar to that described above, thus forming a receiving chain with or without brother nodes. These two chains form the account transaction chain when the system is an account balance model.

Those of ordinary skill in the art may understand that all or some of the acts in the method disclosed in the document, and functional modules/units in the system or apparatus disclosed in the document may be implemented as software, firmware, hardware, and appropriate combinations thereof. In hardware implementations, the division of the functional modules/units mentioned in the description does not necessarily correspond to a division of physical components. For example, a physical component may have a plurality of functions, or a function or act may be performed by one or more physical components in cooperation. Some or all of the components may be implemented as software executed by a processor, such as a digital signal processor or a microprocessor, or as hardware, or as an integrated circuit, such as a specific integrated circuit. Such software may be distributed on a computer readable medium, which may include a computer storage medium (or a non-transitory medium) and a communication medium (or a transitory medium). As is well known to those of ordinary skill in the art, the term computer storage medium includes volatile, nonvolatile, removable, and non-removable medium implemented in any method or technology for storing information (such as computer readable instructions, data structures, program modules, or other data). The computer storage medium includes, but is not limited to, a RAM, a ROM, an EEPROM, a flash memory, or another memory technology, a CD-ROM, a digital versatile disk (DVD), or another optical disk storage, a magnetic cassette, a magnetic tape, a magnetic disk storage, or another magnetic storage apparatus, or any other medium that may be used for storing desired information and may be accessed by a computer. Furthermore, it is well known to those of ordinary skill in the art that a communication medium commonly contains computer readable instructions, data structures, program modules, or other data in a modulated data signal such as a carrier or another transmission mechanism, and may include any information delivery medium.

Those of ordinary skill in the art should understand that the technical solutions of the embodiments of the present application may be modified or replaced equally without departing from the essence and scope of the technical solutions of the present application, which should be included in the scope of the claims of the present application.

## Claims

1. A method for processing data processing, comprising:
writing transaction data into block data of a first chain system after the transaction data is verified to be passed and performed with an endorsement signature;
writing the block data of the first chain system into block data of a second chain system, wherein the block data of the second chain system is sequentially composed of one or more block data of the first chain system, and a state of any account on the first chain system is consistent with a state of the account on the second chain system.

2. The method according to claim 1, wherein,
the first chain system comprises a private chain, and the second chain system comprises a public chain or an alliance chain; or
the first chain system comprises an alliance chain, and the second chain system comprises a public chain or an alliance chain.

3. The method according to claim 1 or 2, wherein the writing transaction data into block data of a first chain system after the transaction data is verified to be passed and performed with the endorsement signature, comprises:
performing the endorsement signature on the transaction data after the transaction data is verified to be passed, wherein the transaction data after being performed with the endorsement signature will be written into the block data of the first chain system;
wherein the transaction data comprises a transaction address of a transaction receiving end and an address parameter generated during a transaction of this time, wherein the transaction address is generated by using an address parameter generated when the transaction receiving end received a transaction last time, and the address parameter generated during the transaction of this time is used for generating a transaction address for the transaction receiving end to receive a transaction next time; and all receiving transaction data at the same transaction receiving end form a logical chain structure.

4. The method according to claim 3, wherein
before the transaction data is verified, the method further comprises: generating an address parameter, searching for the transaction address of the transaction receiving end from a state tree, and sending the generated address parameter and the searched transaction address to a transaction sending end, so that the transaction sending end adds the transaction address and the address parameter to the transaction data;
after the endorsement signature is performed on the transaction data, the method further comprises: generating a new transaction address by using the generated address parameter and updating the transaction address of the transaction receiving end in the state tree when a transaction address in the transaction data is determined to be the same as the transaction address of the transaction receiving end in the state tree.

5. The method according to claim 4, wherein the generating the new transaction address by using the generated address parameter, comprises:
performing one or more operations on the generated address parameter and a key of the transaction receiving end by using a function to generate a transaction address.

6. The method according to claim 5, wherein,
the transaction address of the transaction receiving end is generated in the following way: using a first function to perform an operation on the address parameter and a user key of the transaction receiving end to acquire a first intermediate value, using a second function to perform an operation on the first intermediate value and a user public key of the transaction receiving end to acquire a first public key, and using a third function to perform an operation on the first public key to acquire the transaction address; or
the transaction address of the transaction receiving end is a multi-signature address, and the multi-signature address is generated in the following way: using different functions to perform an operation on the address parameter and the user key of the transaction receiving end to acquire a plurality of intermediate values, using a fourth function to respectively perform an operation on each intermediate value with a plurality of user public keys of the transaction receiving end to acquire a plurality of new public keys, and using a fifth function to perform an operation on the plurality of new public keys to acquire the multi-signature address.

7. The method according to claim 5, further comprising:
generating an initial address parameter of a user when the user is registered, and recording a transaction address generated by the initial address parameter in the state tree; or
regenerating an initial address parameter for a user issued with a new key, and recording a transaction address generated by the regenerated initial address parameter in the state tree, wherein the new key is a key for generating a transaction address.

8. The method according to claim 3, further comprising:
receiving a key update request initiated by a user end, issuing a new encryption key after performing an identity authentication on the user end, initiating a conversion transaction process, enabling a conversion institution account to initiate a transaction, signing the transaction data with a signature key of the conversion institution account, and generating a first unlocking script to convert an unspent transaction output in an original account of the user end into a new unspent transaction output.

9. The method according to claim 1, further comprising one or more of following acts:
generating a designated issuance transaction for issuing a token, wherein an input address in the designated issuance transaction is an address adopting a first format;
generating a designated recycling transaction for recycling a token, wherein an output address in the designated recycling transaction is an address adopting a second format;
generating a designated reward transaction for rewarding a token, wherein an input address in the designated reward transaction is an address adopting a third format.

10. A method for processing data, comprising:
generating, by a transaction receiving end, a transaction address of a receiving transaction of this time according to an address parameter in previous receiving transaction data and searching for transaction data containing the transaction address from a second chain system; wherein block data in the second chain system is sequentially composed of one or more block data of a first chain system, and a state of any account in the first chain system is consistent with a state of the account in the second chain system.

11. The method according to claim 10, further comprising:
comparing an account state acquired from a state tree through a management end with an account state acquired from the second chain system.

12. The method according to claim 10, when the transaction receiving end is used as a transaction sending end, the method further comprises:
generating a public-private key pair by using the address parameter in the previous receiving transaction data referencing the receiving transaction data when the transaction sending end submits a transaction, and generating an unlocking script in the transaction by using the public-private key pair.

13. A method for processing data, comprising:
initiating a conversion transaction, signing transaction data by using a signature key of a conversion institution account, generating a first unlocking script to convert an unspent transaction output in an original account of a user end into a new unspent transaction output, verifying transaction data formed by a transaction initiated by the conversion institution account to be passed and performing an endorsement signature on the transaction data, writing the transaction data into block data of a first chain system, writing the block data of a first chain system into block data of a second chain system, wherein the block data of the second chain system is sequentially composed of one or more block data of the first chain system, and a state of any account on the first chain system is consistent with a state of the account on the second chain system.

14. A management end apparatus, comprising a verification module and an endorsement signature module, wherein:
the verification module is configured to verify transaction data;
the endorsement signature module is configured to perform an endorsement signature on the transaction data after the verification module verifies the transaction data to be passed, wherein the transaction data after being performed with the endorsement signature will be written into block data of a first chain system;
wherein the transaction data comprises a transaction address of a transaction receiving end and an address parameter generated during a transaction of this time, the transaction address is generated by using an address parameter generated when the transaction receiving end received a transaction last time, and the address parameter generated during the transaction of this time is used for generating a transaction address for the transaction receiving end to receive a transaction next time; and all receiving transaction data at the same transaction receiving end form a logical chain structure.

15. The management end apparatus according to claim 14, wherein
the apparatus further comprises a first address generation module, which is configured to generate an address parameter, search for the transaction address of the transaction receiving end from a state tree, and send the generated address parameter and the searched transaction address to a transaction sending end; and is configured to generate a new transaction address by using the generated address parameter and update the transaction address of the transaction receiving end in the state tree when the transaction address in the transaction data is determined to be the same as the transaction address of the transaction receiving end in the state tree.

16. The management end apparatus according to claim 15, wherein,
the first address generation module generates a new transaction address by using the generated address parameter, comprising: the first address generation module uses a function to perform one or more operations on the generated address parameter and a key of the transaction receiving end to generate a transaction address.

17. The management end apparatus according to claim 16, wherein,
the first address generation module generates the transaction address of the transaction receiving end in the following manner: the first address generation module uses a first function to perform an operation on the address parameter and a user key of the transaction receiving end to acquire a first intermediate value, uses a second function to perform an operation on the first intermediate value and a user public key of the transaction receiving end to acquire a first public key, and uses a third function to perform an operation on the first public key to acquire the transaction address; or
the first address generation module generates the transaction address of the transaction receiving end in the following manner: the transaction address of the transaction receiving end is a multi-signature address, the first address generation module uses different functions to perform an operation on the address parameter and the user key of the transaction receiving end to acquire a plurality of intermediate values, uses a fourth function to respectively perform an operation on each intermediate value with a plurality of user public keys of the transaction receiving end to acquire a plurality of new public keys, and used a fifth function to perform an operation on the plurality of new public keys to acquire the multi-signature address.

18. The management end apparatus according to claim 16, wherein:
the first address generation module is further configured to generate an initial address parameter of a user when the user is registered, and record a transaction address generated by the initial address parameter in the state tree; and
the first address generation module is further configured to regenerate an initial address parameter for a user issued with a new key, and record a transaction address generated by the regenerated initial address parameter in the state tree, wherein the new key is a key for generating a transaction address.

19. The management end apparatus according to claim 14,
the apparatus further comprises a key issuance module and a conversion transaction module, wherein:
the key issuance module is configured to receive a key update request initiated by a user end and issue a new encryption key after performing an identity authentication on the user end;
the conversion transaction module is configured to initiate a conversion transaction process, enable a conversion institution account to initiate a transaction, sign the transaction data through a signature key of the conversion institution account, and generate a first unlocking script to convert an unspent transaction output in an original account of the user end into a new unspent transaction output.

20. The management end apparatus according to claim 14, further comprising one or more of the following modules: an issuance transaction module, a recycling transaction module, and a reward transaction module, wherein:
the issuance transaction module is configured to generate a designated issuance transaction for issuing a token, wherein an input address in the designated issuance transaction is an address adopting a first format;
the recycling transaction module is configured to generate a designated recycling transaction for recycling a token, wherein an output address in the designated recycling transaction is an address adopting a second format;
the reward transaction module is configured to generate a designated reward transaction for rewarding a token, wherein an input address in the designated reward transaction is an address adopting a third format.

21. A user end apparatus, comprising a second address generation module and a retrieval module, wherein:
the second address generation module is configured to generate a transaction address of a receiving transaction of this time according to an address parameter in a previous receiving transaction data;
the retrieval module is configured to search for transaction data comprising the transaction address from a second chain system.

22. The user end apparatus according to claim 21,
the user end apparatus further comprises a verification module configured to compare an account state acquired from a state tree through a management end with an account state acquired from the second chain system.

23. The user end apparatus according to claim 21,
the user end apparatus further comprises a signature module, wherein the signature module is configured to generate a public-private key pair by using the address parameter in the previous receiving transaction data referencing the receiving transaction data when submitting a transaction when the user end is used as a transaction sending end, and generate an unlocking script in the transaction by using the public-private key pair.

24. A conversion apparatus comprising an initiation module and a signature module, wherein:
the initiation module is configured to initiate a conversion transaction according to enabling of a management end apparatus;
the signature module is configured to use a signature key of a conversion institution account to sign transaction data and generate a first unlocking script to convert an unspent transaction output in an original account of a user end into a new unspent transaction output;
wherein transaction data formed by a transaction initiated by the conversion institution account is written into block data of a first chain system after being verified to be passed and performed with an endorsement signature, the block data of the first chain system is written into block data of a second chain system, the block data of the second chain system is sequentially composed of one or more block data of the first chain system, and a state of any account on the first chain system is consistent with a state of the account on the second chain system.

25. A computer readable storage medium storing computer instructions which, when executed by a processor, implement the acts of the method according to any one of claims 1-9 or any one of claims 10-12 or claim 13.
